# EUROPEAN PATENT SPECIFICATION

(11) **EP 2 933 776 B1**
(45) Date of publication and mention of the grant of the patent: **09.01.2019**
(21) Application number: 15163670.1
(22) Date of filing: 15.04.2015
(51) Int. Cl.: G06T 5/00, G06T 5/10, G06T 7/00

(54) **IMAGE PROCESSING APPARATUS AND IMAGE PROCESSING METHOD**
BILDVERARBEITUNGSVORRICHTUNG UND BILDVERARBEITUNGSVERFAHREN
APPAREIL ET PROCÉDÉ DE TRAITEMENT DES IMAGES

(30) Priority: 15.04.2014 JP 2014083604; 15.10.2014 JP 2014210995
(43) Date of publication of application: 21.10.2015
(73) Proprietor: TMT Machinery, Inc., Osaka-shi, Osaka 541-0041 (JP)
(72) Inventor: Inui, Toshiya, Kyoto, 612-8686 (JP); Hashimoto, Kinzo, Kyoto, 612-8686 (JP)
(74) Representative: Hoffmann Eitle

(56) References cited:
- D.-M. TSAI ET AL: "Automated surface inspection for directional textures", IMAGE AND VISION COMPUTING, vol. 18, no. 1, 1 December 1999 (1999-12-01), pages 49-62, XP055019481, ISSN: 0262-8856, DOI: 10.1016/S0262-8856(99)00009-8
- Tunák Maros ET AL: "APPLYING SPECTRAL ANALYSIS TO AUTOMATIC INSPECTION OF WEAVING DENSITY", , 1 January 2004 (2004-01-01), XP55207843, Retrieved from the Internet: URL:https://e-learning.tul.cz/elearning/ob r/system/jiny/266/automaticinspectionofwea vingdensity.pdf [retrieved on 2015-08-14]
- HENRY Y T NGAN ET AL: "Automated fabric defect detection A review", IMAGE AND VISION COMPUTING, ELSEVIER, GUILDFORD, GB, vol. 29, no. 7, 27 February 2011 (2011-02-27), pages 442-458, XP028221701, ISSN: 0262-8856, DOI: 10.1016/J.IMAVIS.2011.02.002 [retrieved on 2011-03-24]
- Du-Ming Tsai ET AL: "Automated surface inspection for statistical textures", IMAGE AND VISION COMPUTING, vol. 21, no. 4, 1 April 2003 (2003-04-01), pages 307-323, XP055321786, GUILDFORD, GB ISSN: 0262-8856, DOI: 10.1016/S0262-8856(03)00007-6
- Bugao Xu ET AL: "Identifying Fabric Structures with Fast Fourier Transform Techniques", TEXTILE RESEARCH JOURNAL, vol. 66, no. 8, 1 August 1996 (1996-08-01) , pages 496-506, XP055321873, GB ISSN: 0040-5175, DOI: 10.1177/004051759606600803

## Description

### BACKGROUND OF THE INVENTION

The present invention relates to an image processing apparatus and an image processing method each for processing an image of a specimen of a woven or knitted fabric.

There have been produced synthetic fiber yarns such as polyester yarns through various ways for various applications. For example, Patent Literature 1 (Japanese Unexamined Patent Publication No. 2014-5555) discloses production of FDY (fully drawn yarn), which is one of typical yarns. In Patent Literature 1, synthetic fiber yarns spun out from a melt spinning apparatus are wound onto a plurality of heating rollers. On the heating rollers, the yarns are drawn while being heated to a predetermined temperature, and thereby the yarns have a desired property.

If, in the process of producing the yarns as described above, there is heating unevenness in a yarn, for example, due to uneven application of process oil to the yarn and/or a change in temperature of each heating roller, there may be caused a variation in heating history of the yarn and/or a variation in drawing degree of the yarn. This possibly causes unevenness in the degree of orientation and/or in the degree of crystallinity inside a single yarn, and/or possibly causes a variation in thickness of the yarn.

If there is such a variation in raw yarns or processed yarns constituting a woven or knitted fabric which is an end product, the variation becomes apparent as a defect such as uneven dyeing and a defective configuration of the end product after the final process is completed. This causes a tremendous loss. To minimize such a loss, various types of yarn quality testing are performed to find the variation in the raw yarns or processed yarns during the process of producing the raw yarns or processed yarns, thereby preventing defective yarns from being forwarded to subsequent processes.

In addition to the above-described production of FDY, in the production of synthetic fiber yarns, there are various types of yarns, production processes, and facilities corresponding to these. In the production of POY (partially oriented yarn) disclosed in Patent Literature 2 (Japanese Patent No. 4491017), and in the production of DTY (draw textured yarn) which is produced by high-order processing of POY and disclosed in Patent Literature 3 (Japanese Unexamined Patent Publication No. 2007-277751), various types of yarn quality testing are performed similarly to the above-described FDY, to check the quality of yarns obtained in each process, thereby preventing defective yarns from being forwarded to subsequent processes.

Generally, in addition to strength testing, elongation testing, heat shrinkage testing, testing for evaluating a variation in fineness in the longitudinal direction of yarns, and the like, there has commonly been performed testing as is described in Non-Patent Literature 1 (Osamu YOSHIMURA, and 7 other authors, "Consideration of the Quality Evaluation Technique for the Development of Textiles - Preparation of a Manual for Quality Evaluation using the Yarn Inspection System -", 2010 Research Report vol. 60, Industrial Research Institute of Ishikawa) in the process of producing raw yarns or processed yarns. In this testing, a specimen obtained by circularly knitting a yarn is dyed, and the presence or absence of uneven dyeing on the dyed specimen is determined. In the circularly-knitted fabric testing, the circularly-knitted specimen is immersed in a prepared dye for a predetermined period of times while being heated, thereby to be dyed. If there is a variation in the degree of orientation and/or in the degree of crystallinity in a yarn forming the knitted fabric, caused is a difference in permeability of the dye into the yarn. Therefore, such a variation in the yarn is perceived as a difference in density (lightness or darkness) of a dyeing color, that is, uneven dyeing. Meanwhile, in testing for a woven fabric, using an undyed woven specimen called gray fabric, deviation of a yarn constituting the woven fabric is checked by visually observing a change in brightness on the surface of the woven fabric, which is caused because there is a difference in a manner of reflection of light due to surface asperities formed by the yarns.

Tsai and Hsieh, "Automated surface inspection for directional textures", Image and Vision Computing 18 (1999) 49-62 discloses features falling under the preamble of claim 1. Maro 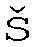 and Ale 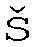 , "Applying Spectral Analysis to Automatic Inspection of Weaving Density", is further prior art.

Henry Y. T. Ngan et al., "Automated fabric defect detection: A review", Image and vision computing, vol. 29, no. 7, 2011, is a review paper on image processing methods used for automated fabric defect detection.

Bugao Xu et al., "Identifying Fabric Structures with Fast Fourier Transform Techniques", Textile research journal, vol. 66, no. 8, 1996 discloses image processing to identify weave pattern, fabric count, yarn skewness and other structural characteristics of woven fabrics.

### SUMMARY OF THE INVENTION

In general, a determination of the presence or absence of uneven dyeing is typically made by visually observing a dyed specimen with human eyes. A knitted fabric used as a specimen is formed by knitting a single yarn, and therefore, the specimen has stitches. The stitches disturb observation with human eyes in the determination for uneven dyeing on the dyed specimen obtained by dyeing the knitted fabric. As a result, an erroneous conclusion may be formed.

Further, in general, a determination for a defect of a woven fabric is typically made by visually observing a gray fabric, which is an undyed fabric, with human eyes. On the gray fabric used as a specimen, however, there is a regular texture pattern made by intersections of warp and weft yarns. In order to find out a defect of the gray fabric, such as a yarn slack, yarn falling, and tight yarn, it is needed to find a minute change in the continuously extending texture pattern. This is laborious work requiring high skill.

The present invention has been made in view of the above-described circumstances. An object of the present invention is to make it easier to determine the presence or absence of a defect of a woven or knitted fabric by making a texture or stitch pattern of a specimen less noticeable, which pattern is included in an image obtained by photographing the specimen that is a dyed specimen for the knitted fabric or a gray fabric for the woven fabric.

According to a first aspect of the invention, an image processing apparatus has the features of claim 1.

In this aspect, the texture or stitch reduction process is executed on the specimen image obtained by photographing the surface of the specimen of the woven or knitted fabric made of the synthetic fiber yarns. With this, the texture or stitch pattern in the specimen image becomes less noticeable, which makes it easier to recognize the targeted uneven dyeing or defect of a gray fabric such as a distortion of a weave pattern. This increases the accuracy in the determination for uneven dyeing or a defect of the gray fabric based on the specimen image. Accordingly, it is less likely that an erroneous conclusion is formed in the determination for uneven dyeing or for the defect of the gray fabric.

According to the invention, the image processing apparatus is arranged such that: assuming that the number of repetitions of a density or brightness wave per a predetermined length with respect to a direction parallel to the surface of the specimen is N, a fluctuation in density or brightness on the specimen image is regarded as a composite waveform of a plurality of density or brightness waveforms of which numbers of repetitions N of the density or brightness wave are different from one another, and the texture or stitch reduction process includes: a spectrum analysis process of performing a two-dimensional Fourier transform on the specimen image, thereby decomposing the fluctuation in density or brightness on the specimen image with respect to the direction parallel to the surface of the specimen into the plurality of density or brightness waveforms of which numbers of repetitions N of the density or brightness wave are different from one another, to obtain a density or brightness spectral distribution; a texture or stitch removal process of removing one or more density or brightness waveforms resulting from the texture or stitch pattern of the woven or knitted fabric from the density or brightness spectral distribution obtained in the spectrum analysis process; and an inverse transform process of performing a two-dimensional inverse Fourier transform on the density or brightness spectral distribution after the texture or stitch removal process, thereby obtaining the specimen image from which the texture or stitch pattern has been removed.

On the specimen image obtained by photographing the specimen of the woven or knitted fabric, there is a variation in density or brightness resulting from the regular texture or stitch pattern in addition to that resulting from uneven dyeing or a gray-fabric defect. It should be noted that the brightness of a gray fabric indicates the luminous intensity of light reflected by a surface of a woven fabric. The larger the amount of the reflected light is, the higher the brightness is. Meanwhile, the smaller the amount of the reflected light is, because of being shadowed, the lower the brightness is. Further, the manner of the variation in density or brightness (such as the frequency of repetitions) differs depending on its cause. For example, the variation in density or brightness resulting from uneven dyeing or a gray-fabric defect is generally gradual and irregular, while the variation in density or brightness resulting from the regular texture or stitch pattern is fine and regular correspondingly to intervals of yarns.

Therefore, in this aspect, the fluctuation in density or brightness on the specimen image is first regarded as a composite waveform of a plurality of density or brightness waveforms of which numbers of repetitions of a density or brightness wave are different from one another. That is, the fluctuation in density or brightness on the specimen image is regarded as a composite of a plurality of density or brightness waveforms generated by different causes. It should be noted that "a density or brightness wave" means a single wave from one crest to the next crest in a single density or brightness waveform. Therefore, a density or brightness waveform of which number of repetitions of the density or brightness wave per a predetermined length is large is a waveform in which density or brightness varies finely. Then, in the spectrum analysis process, the fluctuation in density or brightness on the specimen image is decomposed into the plurality of density or brightness waveforms, to obtain the density or brightness spectral distribution. Now, because the number of stitches of the knitted fabric as the specimen or the number of floats of the woven fabric as the specimen (the number of portions where warp yarns crossing over weft yarns, or the number of portions where weft yarns crossing over warp yarns) are known, it is easy to presumably distinguish one or more density or brightness waveforms resulting from the texture or stitch pattern. Then, in the texture or stitch removal process, the one or more density or brightness waveforms resulting from the texture or stitch pattern are removed from the density or brightness spectral distribution. Thereafter, the inverse transform process is performed on the thus obtained density or brightness spectral distribution, and thereby the specimen image from which the texture or stitch pattern has been removed is obtained.

According to a preferred aspect of the invention, the image processing apparatus is arranged such that: in the spectrum analysis process, the two-dimensional Fourier transform is performed on the specimen image with respect to each of first and second directions which are parallel to the surface of the specimen and cross each other, thereby to obtain a first density or brightness spectral distribution and a second density or brightness spectral distribution, respectively; in the texture or stitch removal process, the one or more density or brightness waveforms resulting from the texture or stitch pattern of the woven or knitted fabric are removed from both of the first density or brightness spectral distribution and the second density or brightness spectral distribution; and in the inverse transform process, the two-dimensional inverse Fourier transform is performed on both of the first density or brightness spectral distribution and the second density or brightness spectral distribution, thereby to obtain the specimen image from which the texture or stitch pattern has been removed with respect to both of the first direction and the second direction.

Now, the stitch pattern is formed by loops which are continuous and connected with one another in two directions. The texture pattern is formed by yarns woven so that the yarns extending in two directions intersect one another. According to this aspect, the two-dimensional Fourier transform is performed on the specimen image with respect to each of the first and second directions crossing each other, in each of which directions the yarns are arranged on the specimen image obtained by photographing the woven or knitted fabric, thereby to obtain the first density or brightness spectral distribution and the second density or brightness spectral distribution. Further, from these density or brightness spectral distributions, removed are the density or brightness waveforms resulting from the texture or stitch pattern of the woven or knitted fabric. The two-dimensional inverse Fourier transform is performed on the thus processed first and second density or brightness spectral distributions, thereby to obtain the specimen image from which the whole texture or stitch pattern is removed.

According to the invention, the image processing apparatus is arranged such that, in the texture or stitch removal process, assuming that the number of repetitions of the density or brightness wave of a waveform caused by the texture or stitch pattern with respect to a predetermined direction is defined as N1, all the density or brightness waveforms each of which number of repetitions of the density or brightness wave is not less than N1 are removed from the density or brightness spectral distribution.

The variation in density or brightness caused by the texture or stitch pattern on the specimen image is fine and regular correspondingly to the size of each stitch of the photographed knitted fabric, or to the intervals of the yarns of the photographed woven fabric. Therefore, the number of repetitions of the density or brightness wave resulting from the texture or stitch pattern is larger. On the other hand, the variation in density or brightness on the specimen image resulting from a pattern resulting from uneven dyeing or a defect of the woven fabric is generally gradual and irregular. Therefore, the number of repetitions of the density or brightness wave resulting from the pattern resulting from uneven dyeing or the defect of the woven fabric is smaller. Consequently, the number of repetitions of the density or brightness wave resulting from the pattern resulting from uneven dyeing or the defect of the woven fabric is smaller than the number of repetitions N1 of the density or brightness wave caused by the texture or stitch pattern. That is, in the density or brightness spectral distribution, the density or brightness waveforms each of which number of repetitions of the density or brightness wave is larger than N1 do not result from, at least, uneven dyeing or the defect of the woven fabric. Hence, these waveforms are removed.

According to a fifth aspect of the invention, an image processing method for a specimen image obtained by photographing a surface of a specimen of a woven or knitted fabric made of one or more synthetic fiber yarns has the features of claim 3.

In this aspect, the texture or stitch reduction step of making the texture or stitch pattern of the woven or knitted fabric less noticeable is executed on the specimen image obtained by photographing the surface of the specimen of the woven or knitted fabric made of the synthetic fiber yarns. With this, similarly to the first aspect, the texture or stitch pattern on the specimen image becomes less noticeable, which makes it easier to recognize the targeted uneven dyeing or defect of the woven fabric. This increases the accuracy in the determination for uneven dyeing or a defect of the woven fabric based on the specimen image. Accordingly, it is less likely that an erroneous conclusion is formed in the determination for uneven dyeing or for the defect of the woven fabric.

### BRIEF DESCRIPTION OF THE DRAWINGS

FIG. 1 is a block diagram showing a defect inspection apparatus for uneven dyeing, with peripheral devices connected to the apparatus.
FIG. 2A is a top view of the scene where a specimen is photographed, and FIG. 2B is a side view of the scene.
FIG. 3A shows an image of a dyed specimen before removal of a stitch pattern, and FIG. 3B is an enlarged view of the image of FIG. 3A.
FIGs. 4A to 4C are graphs for explaining the concept of composition of and decomposition into density waveforms of the image of the dyed specimen.
FIG. 5A is a graph showing a first density spectral distribution, and FIG. 5B is a graph showing a second density spectral distribution.
FIG. 6 shows the image of the dyed specimen after removal of the stitch pattern.

### DESCRIPTION OF THE PREFERRED EMBODIMENTS

The following will describe an embodiment of the present invention with reference to figures.

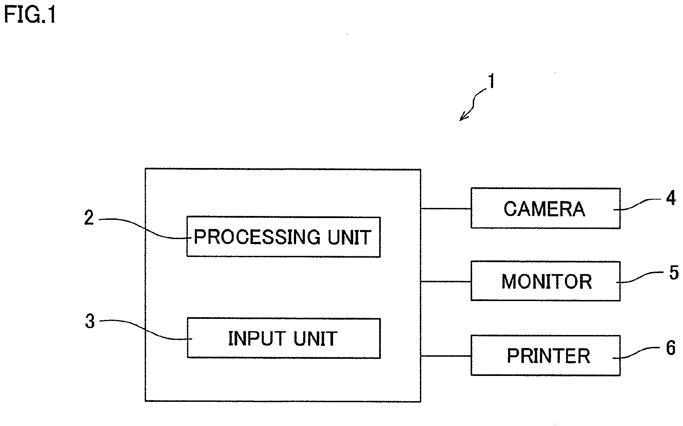

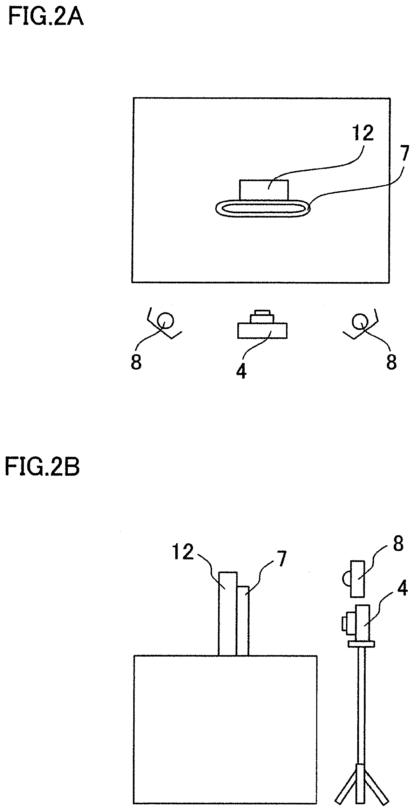

A defect inspection apparatus 1 of the present embodiment shown in FIG. 1 is used to inspect a dyed specimen 7 (see FIG. 2) for uneven dyeing. The specimen 7 is a dyed knitted fabric.

First of all, a brief description will be given for the dyed specimen 7, which is an object of the inspection on the defect inspection apparatus 1. The dyed specimen 7 shown in FIG. 2 is a knitted fabric formed by circularly knitting a single yarn, specifically, by repeating a process of forming a loop and then passing the yarn into the loop to form a new loop. On a specimen image 9, the loops of the yarn of the dyed specimen 7 correspond to portions where warp parts Y1 shown as wavy lines extending in a direction Y overlap weft parts Y2 shown as wavy lines extending in a direction X.

The defect inspection apparatus 1 of the present embodiment is constituted by a central processing unit (CPU), a memory, a hard disk, and the like. As shown in FIG. 1, the defect inspection apparatus 1 is connectable to: a camera 4 with which the dyed specimen 7 is photographed; a monitor 5 on which an operation screen of the defect inspection apparatus 1, the specimen image 9, and the like are displayed; and a printer 6 from which the specimen image 9, an inspection result, and the like are printed out. The defect inspection apparatus 1 includes: a processing unit 2 configured to execute various types of processing such as processing of the specimen image 9 of the dyed specimen 7 taken with the camera 4, and output processing to the monitor 5 or to the printer 6; and an input unit 3 through which data is input.

Now, a description will be given for a procedure of determining the presence or absence of uneven dyeing on the dyed specimen 7 by using the above-described defect inspection apparatus 1.

First, as shown in FIGs. 2A and 2B, the dyed specimen 7, which is the object of the inspection, is photographed with the camera 4. When the dyed specimen 7 is photographed, the magnification of the camera 4, and the distance between the dyed specimen 7 and the camera 4 are respectively set to be predetermined values. The magnification and the distance are thus predetermined, which makes it possible to derive the size of the dyed specimen 7 on the thus taken specimen image 9.

The dyed specimen 7 is disposed with its front facing the camera 4, while being supported and secured by a support member 12 so that openings of the circularly knitted fabric are aligned vertically one above the other. Further, while photographed, for example, the dyed specimen 7 is lighted up by two lights 8 and the exposure of the camera 4 is adjusted. The two lights 8 are disposed symmetrically with respect to the camera 4 and each of the lights 8 is positioned at approximately 45 degrees relative to the line connecting the dyed specimen 7 and the camera 4. After the specimen image 9 is taken, the camera 4 is connected to the defect inspection apparatus 1, and the data of the thus taken specimen image 9 is input to the defect inspection apparatus 1.

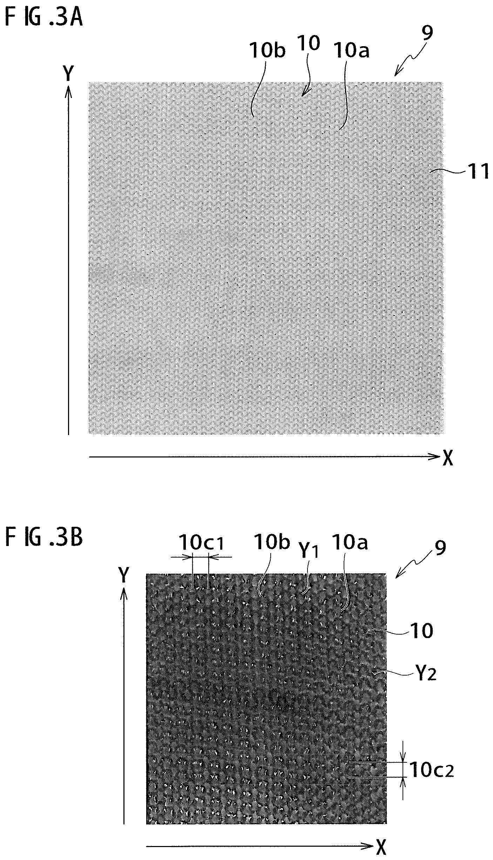

FIG. 3A shows the specimen image 9 of the dyed specimen 7, obtained through the above-described photographing. Hereinafter, the specimen image 9 will be detailed.

As shown in FIGs. 3A and 3B, on the specimen image 9 obtained by photographing the dyed specimen 7 having a stitch pattern, there are: a plurality of vertical wavy lines 10a which are arranged in a direction X at substantially equal intervals and correspond to the warp parts Y1 in the above-described loops of the dyed specimen 7; and a plurality of horizontal wavy lines 10b which are arranged in the direction Y at substantially equal intervals and correspond to the weft parts Y2 in the above-described loops of the dyed specimen 7. On the specimen image 9, the vertical wavy lines 10a and the horizontal wavy lines 10b orthogonally cross one another, thereby forming a stitch pattern 10. On the stitch pattern 10, a part between two adjacent vertical wavy lines 10a is defined as a stitch 10c1, and a part between two adjacent horizontal wavy lines 10b is defined as a stitch 10c2. The vertical wavy lines 10a and the horizontal wavy lines 10b are darker than the other portion. That is, due to the existence of the stitch pattern 10, there is a regular variation in density on the specimen image 9 in each of the directions X and Y.

On the dyed specimen 7, there may be uneven dyeing. As shown in FIG. 3A, an uneven dyeing pattern 11 appears on the taken specimen image 9. The uneven dyeing on the dyed specimen 7 causes a gradual variation in density on the overall dyed specimen 7. That is, on the specimen image 9, the uneven dyeing pattern 11 causes a variation in density which is of a totally different type from that of the stitch pattern 10.

As described above, on the specimen image 9, variations in density resulting from a variety of factors, such as the stitch pattern and uneven dyeing of the photographed dyed specimen 7, are combined into a fluctuation in density on the specimen image 9. In other words, the fluctuation in density appearing on the specimen image 9 can be regarded as a composite waveform of a plurality of density waveforms.

Each of the density waveforms is formed by repeating a density wave. Among the density waveforms, the numbers of repetitions of the density wave per a predetermined length are different from one another. For example, as shown in FIG. 3B, with respect to the direction X, there are crests of the density at the positions of the vertical wavy lines 10a. That is, there is a single wave indicating a variation in density between one vertical wavy line 10a and another vertical wavy line 10a adjacent thereto, i.e., at a stitch 10c1. Thus, the variation between the crests of the density is defined as a single density wave.

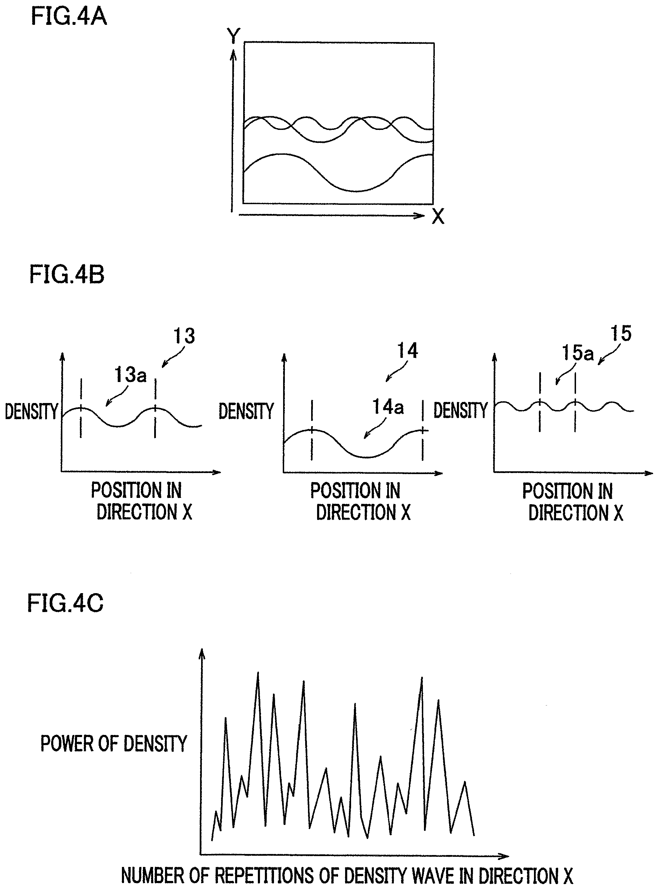

FIG. 4A is a schematic diagram showing the fluctuation in density on the specimen image 9. As shown in FIG. 4A, the fluctuation in density on the specimen image 9 is formed by the combination of the plurality of density waveforms of which numbers of repetitions of the density wave per the predetermined length are different from one another. Therefore, it is possible to remove the density waveforms resulting from the stitch pattern 10 by separating the density waveforms from one another as shown in FIG. 4B.

In the defect inspection apparatus 1, the processing unit 2 executes a stitch removal process of removing the stitch pattern 10 of the specimen image 9. The following will describe the stitch removal process.

As shown in FIG. 4A, the fluctuation in density on the specimen image 9 is regarded as the composite waveform of the plurality of density waveforms. A two-dimensional Fourier transform is performed on the specimen image 9 with respect to the direction X, and thereby, the fluctuation in density on the specimen image 9 with respect to the direction X is decomposed into density waveforms 13, 14, and 15, as shown in FIG. 4B. With this, obtained is the relationship between the position in the direction X and the density for each of the density waveforms 13, 14, and 15, of which numbers of repetitions of a density wave (13a, 14a, 15a) are different from one another. Then, based on these, the fluctuation in density on the specimen image 9 with respect to the direction X is shown in the form of the relationship between the number of repetitions of the density wave per the predetermined length and the power of density (which is proportional to the amplitude of each density waveform shown in FIG. 4B), as shown in FIG. 4C. This relationship is referred to as a "density spectral distribution".

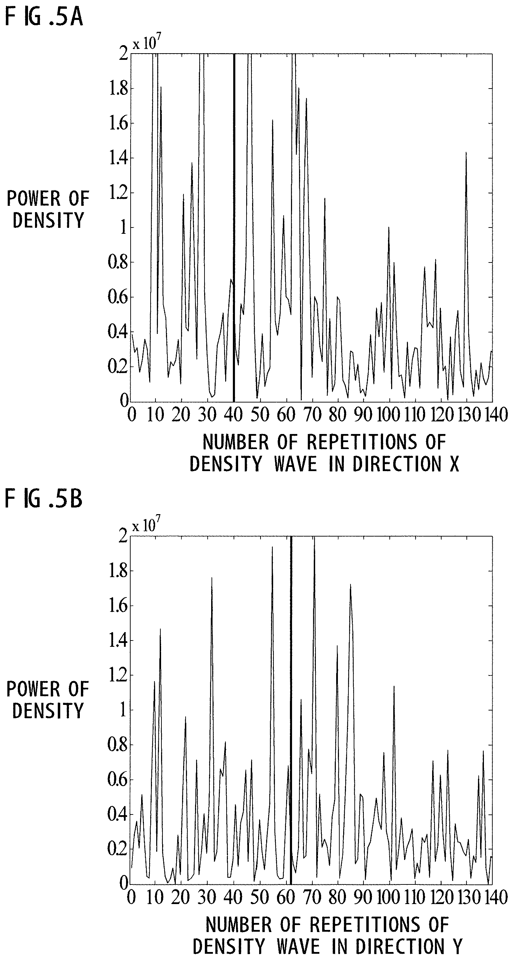

The processing unit 2 of the defect inspection apparatus 1 performs the above-described two-dimensional Fourier transform on the specimen image 9 with respect to each of (i) the direction X in which the warp parts Y1 of the dyed specimen 7 are arranged and (ii) the direction Y in which the weft parts Y2 of the dyed specimen 7 are arranged. Thus, the fluctuation in density on the specimen image 9 is decomposed, for each of the directions X and Y, into the plurality of density waveforms of which numbers of repetitions of the density wave are different from one another, to obtain a first density spectral distribution and a second density spectral distribution, as shown in FIGs. 5A and 5B, respectively. In the first density spectral distribution shown in FIG. 5A, the abscissa represents the number of repetitions of the density wave per the predetermined length with respect to the direction X of FIG. 3A, and the ordinate represents the power of density. In the second density spectral distribution shown in FIG. 5B, the abscissa represents the number of repetitions of the density wave per the predetermined length with respect to the direction Y in FIG. 3A, and the ordinate represents the power of density.

Then, the density waveforms resulting from the stitch pattern 10 of the dyed specimen 7 are removed from each of the first and second density spectral distributions.

As described above, the camera 4 with which the specimen image 9 is taken is set into the predetermined condition, based on which the size of the dyed specimen 7 included in the taken specimen image 9 is derived. Further, the intervals between the warp parts Y1 in the loops constituting the dyed specimen 7 and the intervals between the weft parts Y2 in the loops constituting the dyed specimen 7 are known, based on which the number of vertical wavy lines 10a and the number of horizontal wavy lines 10b on the specimen image 9 are also derived. In addition, the vertical wavy lines 10a have the same number of stitches 10c1, and the horizontal wavy lines 10b have the same number of stitches 10c2. Therefore, from the size of the dyed specimen 7 included in the taken specimen image 9, the number of the stitches 10c1 and 10c2 included in the stitch pattern 10 is obtained. Moreover, the number of the stitches (10c1, 10c2) of each line corresponds to the number of density waves constituting each density waveform caused by the stitch pattern 10. Therefore, from the number of the stitches (10c1, 10c2) thus obtained, derived is the number of repetitions of the density wave per the predetermined length in each density waveform caused by the stitch pattern 10.

In the present embodiment, the number of the stitches (10c1, 10c2) of the dyed specimen 7 is input by an inspector through the input unit 3. Based on the number of stitches (10c1, 10c2), the processing unit 2 calculates the number of repetitions of the density wave of each density waveform caused by the stitch pattern 10. The processing unit 2 further removes the density waveforms resulting from the stitch pattern 10 from the first and second density spectral distributions.

On each vertical wavy line 10a and each horizontal wavy line 10b, there is a small local fluctuation in density. In addition, there is a fluctuation in density in a minute portion on the boundary between each vertical wavy line 10a or each horizontal wavy line 10b and the area around the wavy line. Generally, the number of repetitions in each of the density waveforms caused by the above is larger than the number of repetitions in each density waveform of which number of repetitions is determined based on the intervals between the stitches (10c1, 10c2).

Now, in a predetermined direction, the density wave of each density waveform resulting from the stitch pattern 10 is repeatedly generated in short cycles, correspondingly to the intervals between the vertical wavy lines 10a or the horizontal wavy lines 10b. Accordingly, the wavelength of the density waveform (the distance between the crests of the density waves) is short, and therefore the number of repetitions of the density wave of each density waveform resulting from the stitch pattern 10 is larger. On the other hand, the wavelength of the density waveform resulting from the uneven dyeing pattern 11 is larger because the variation in density is gradual. Therefore, the number of repetitions of the density wave of the density waveform resulting from the uneven dyeing pattern 11 is smaller. Accordingly, the number of repetitions of the density wave of the density waveform resulting from the uneven dyeing pattern 11 is smaller than the number of repetitions of the density wave of each density waveform resulting from the stitch pattern 10.

In view of the above, each density waveforms of which number of repetitions of the density wave is larger than the number of repetitions of the density wave of the waveform caused by the stitch pattern 10 is not the waveform resulting from, at least, uneven dyeing on the dyed specimen 7. Therefore, the processing unit 2 of the defect inspection apparatus 1 removes waveforms each of which number of repetitions of the density wave is larger than the corresponding number of the stitches (10c1, 10c2), and thereby the above-described density waveforms resulting from the stitch pattern 10 on the specimen image 9 are removed. More specifically, on the specimen image 9 shown in FIG. 3A, the number of repetitions of the density wave of each density waveform caused by the stitch pattern 10 from one end to the other end in the direction X is 40, while the number of repetitions of the density wave of each density waveform caused by the stitch pattern 10 from one end to the other end in the direction Y is 62. Therefore, in FIG. 5A, the area to the right of the threshold of 40 on the abscissa is removed, while in FIG. 5B, the area to the right of the threshold of 62 on the abscissa is removed.

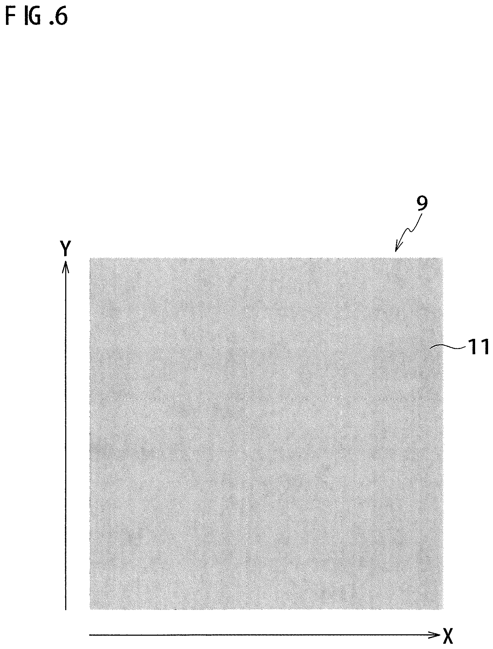

Then, on each of the thus processed first and second density spectral distributions, the two-dimensional inverse Fourier transform is performed. With this, obtained is the specimen image 9 shown in FIG. 6, from which the stitch pattern 10 has been removed and the uneven dyeing pattern 11 is more noticeable.

Thereafter, the processing unit 2 of the defect inspection apparatus 1 performs a process of determining the presence or absence of uneven dyeing, when needed, using the specimen image 9 from which the stitch pattern 10 has been removed.

As described above, in the present embodiment, the stitch removal process is executed on the specimen image 9. With this, the stitch pattern 10 on the specimen image 9 becomes less noticeable, which makes it easier to recognize the targeted uneven dyeing. This increases the accuracy in the determination for uneven dyeing based on the specimen image 9. Accordingly, it is less likely that an erroneous conclusion is formed in the determination for uneven dyeing.

Further, the stitch pattern 10 is thus removed from the specimen image 9, and this enables the processing unit 2 to make the determination for uneven dyeing on the dyed specimen 7 with high accuracy. Note that, the inspector may print out the processed specimen image 9 using the printer 6 connected to the defect inspection apparatus 1, to check the image 9.

While a preferred embodiment of the invention has been described, the present invention is not limited to the embodiment above, and it is evident that many alternatives, modifications and variations will be apparent to those skilled in the art, within the scope of the claims.

In the above embodiment, the defect inspection apparatus 1 is connected to the printer 6. However, the defect inspection apparatus 1 does not have to be connected to the printer 6, for example when there is no need for the inspector to print out the specimen image 9 from which the stitch pattern 10 has been removed to visually observe the image 9 or to make the determination on the image 9.

In the above embodiment, each number of the stitches (10c1, 10c2) on the specimen image 9 is input by the inspector through the input unit 2. However, the apparatus may automatically detect and obtain the number of repetitions of the stitch pattern 10 with respect to a predetermined direction parallel to the specimen image 9 when loading the specimen image 9, for example.

In the above embodiment, the defect inspection apparatus 1 automatically performs not only image processing on the specimen image 9 but also the determination for uneven dyeing based on the processed image. However, the determination for uneven dyeing may be performed separately. For example, the determination may be performed using software (a program) for the determination of uneven dyeing, which is run on an external apparatus connected to the defect inspection apparatus 1, such as a personal computer. Alternatively, the determination for uneven dyeing based on the specimen image 9 may be performed by a person through the visual observation thereof. More specifically, the specimen image 9 from which the stitch pattern 10 has been removed may be printed out on the printer 6, or may be displayed on the monitor 5, to be visually observed by the inspector for making the determination. The removal of the stitch pattern 10 from the specimen image 9 makes the determination for the uneven dyeing pattern 11 easier, and therefore, the determination does not require the inspector to have high skill.

In the above embodiment, the entire stitch pattern 10 on the specimen image 9 is removed by performing the two-dimensional Fourier transform with respect to each of the direction X in which the vertical wavy lines 10a are arranged and the direction Y in which the horizontal wavy lines 10b are arranged. However, only a part of the stitch pattern 10 may be removed. For example, among components of the stitch pattern 10, only the components in the direction X may be removed. In this case, the components of the stitch pattern 10 in the direction Y are not removed and remain. However, the determination for uneven dyeing is easier, than the case where no process is performed on the stitch pattern 10.

In the above embodiment, the two-dimensional Fourier transform is used to remove the stitch pattern 10 from the specimen image 9 obtained by photographing the dyed specimen 7, to make the determination for uneven dyeing easier. However, different means may be used to remove the stitch pattern 10. For example, the pixels corresponding to the stitch pattern 10 on the specimen image 9 can be identified, and therefore the defect inspection apparatus 1 may make the stitch pattern 10 less noticeable by changing the color of the pixels corresponding to the stitch pattern 10 on the specimen image 9 to be closer to the color with which the dyed specimen 7 is dyed. This makes it easier to recognize the uneven dyeing pattern 11. Therefore, the determination for uneven dyeing is made easily.

The above embodiment deals with a case where the stitches are removed in the testing for the circularly-knitted fabric; however, this technique is applicable to testing for a woven fabric such as a gray fabric. From a specimen image obtained by photographing a surface of a woven fabric which is an object of determination, a change in brightness resulting from light reflected by yarns at their normal positions is removed, thereby to make a yarn deviating from its normal position noticeable. That is, attention is focused onto the fact that a defect in an undyed woven fabric such as the gray fabric clearly appears as a change in brightness, not as a change in density of a color. Therefore, a process similar to that is performed on the density waveforms of the dyed specimen image 9 is performed on the brightness waveform of the specimen image of the woven fabric, and thereby the change in brightness resulting from the yarns at their normal positions are removed, which makes it possible to determine the presence or absence of a defect with high accuracy. Thus, it is easy to make the determination for a variety of defects of the woven fabric, such as a yarn slack, yarn falling, tight yarn, reed streak, heavy or light bar of weft or warp, open set mark (an significant gap between weft yarns), warp streak caused by unevenness related to warp, float (floating of a part of weft over warp), undershot, mixed yarn. This enables a person without high skill to make the determination with sufficient accuracy.

## Claims

1. An image processing apparatus configured to perform image processing on a specimen image obtained by photographing a surface of a specimen (7) of a woven or knitted fabric made of one or more synthetic fiber yarns, wherein
the image processing apparatus executes a texture or stitch reduction process of making a texture or stitch pattern of the woven or knitted fabric less noticeable on the specimen image,
wherein
assuming that the number of repetitions of a density or brightness wave per a predetermined length with respect to a direction parallel to the surface of the specimen is N, a fluctuation in density or brightness on the specimen image is regarded as a composite waveform of a plurality of density or brightness waveforms of which numbers of repetitions N of the density or brightness wave are different from one another, and the texture or stitch reduction process comprises:
a spectrum analysis process of performing a two-dimensional Fourier transform on the specimen image, thereby decomposing the fluctuation in density or brightness on the specimen image with respect to the direction parallel to the surface of the specimen into the plurality of density or brightness waveforms of which numbers of repetitions N of the density or brightness wave are different from one another, to obtain a density or brightness spectral distribution;
a texture or stitch removal process of removing one or more density or brightness waveforms resulting from the texture or stitch pattern of the woven or knitted fabric from the density or brightness spectral distribution obtained in the spectrum analysis process; and
an inverse transform process of performing a two-dimensional inverse Fourier transform on the density or brightness spectral distribution after the texture or stitch removal process, thereby obtaining the specimen image from which the texture or stitch pattern has been removed
**characterized in that**
in the texture or stitch removal process, assuming that the number of repetitions of the density or brightness wave of a waveform caused by the texture or stitch pattern with respect to a predetermined direction is defined as N1, all the density or brightness waveforms each of which number of repetitions of the density or brightness wave is not less than N1 are removed from the density or brightness spectral distribution.

2. The image processing apparatus according to claim 1, wherein:
in the spectrum analysis process, the two-dimensional Fourier transform is performed on the specimen image with respect to each of first and second directions which are parallel to the surface of the specimen and cross each other, thereby to obtain a first density or brightness spectral distribution and a second density or brightness spectral distribution, respectively;
in the texture or stitch removal process, the one or more density or brightness waveforms resulting from the texture or stitch pattern of the woven or knitted fabric are removed from both of the first density or brightness spectral distribution and the second density or brightness spectral distribution; and
in the inverse transform process, the two-dimensional inverse Fourier transform is performed on both of the first density or brightness spectral distribution and the second density or brightness spectral distribution, thereby to obtain the specimen image from which the texture or stitch pattern has been removed with respect to both of the first direction and the second direction.

3. An image processing method for a specimen image obtained by photographing a surface of a specimen of a woven or knitted fabric made of one or more synthetic fiber yarns,
the image processing method comprising a texture or stitch reduction step of making a texture or stitch pattern of the woven or knitted fabric less noticeable on the specimen image
wherein
assuming that the number of repetitions of a density or brightness wave per a predetermined length with respect to a direction parallel to the surface of the specimen is N, a fluctuation in density or brightness on the specimen image is regarded as a composite waveform of a plurality of density or brightness waveforms of which numbers of repetitions N of the density or brightness wave are different from one another, and the texture or stitch reduction process comprises:
a spectrum analysis process of performing a two-dimensional Fourier transform on the specimen image, thereby decomposing the fluctuation in density or brightness on the specimen image with respect to the direction parallel to the surface of the specimen into the plurality of density or brightness waveforms of which numbers of repetitions N of the density or brightness wave are different from one another, to obtain a density or brightness spectral distribution;
a texture or stitch removal process of removing one or more density or brightness waveforms resulting from the texture or stitch pattern of the woven or knitted fabric from the density or brightness spectral distribution obtained in the spectrum analysis process; and
an inverse transform process of performing a two-dimensional inverse Fourier transform on the density or brightness spectral distribution after the texture or stitch removal process, thereby obtaining the specimen image from which the texture or stitch pattern has been removed
**characterized in that**
in the texture or stitch removal process, assuming that the number of repetitions of the density or brightness wave of a waveform caused by the texture or stitch pattern with respect to a predetermined direction is defined as N1, all the density or brightness waveforms each of which number of repetitions of the density or brightness wave is not less than N1 are removed from the density or brightness spectral distribution.

## Patentansprüche

1. Bildbearbeitungsvorrichtung, die konfiguriert ist, um eine Bildbearbeitung an einem Probenbild durchzuführen, das durch Fotografieren einer Oberfläche einer Probe (7) eines gewebten oder gestrickten Stoffes aus einem oder mehreren synthetischen Fasergarnen erhalten wird, wobei
die Bildbearbeitungsvorrichtung einen Textur- oder Stichverringerungsprozess ausführt, um ein Textur- oder Stichmuster des gewebten oder gestrickten Stoffes auf dem Probenbild weniger bemerkbar zu machen,
wobei
vorausgesetzt, dass die Anzahl der Wiederholungen einer Dichte- oder Helligkeitswelle pro vorbestimmter Länge in Bezug auf eine Richtung parallel zur Oberfläche der Probe N ist, eine Schwankung der Dichte oder Helligkeit auf dem Probenbild als eine zusammengesetzte Wellenform einer Vielzahl von Dichte- oder Helligkeitswellenformen betrachtet wird, deren Anzahlen von Wiederholungen N der Dichte- oder Helligkeitswelle sich voneinander unterscheiden und das Textur- oder Stichverringerungsprozess umfasst:
einen Spektralanalyseprozess zum Durchführen einer zweidimensionalen Fourier-Transformation an dem Probenbild, wodurch die Schwankung der Dichte oder Helligkeit auf dem Probenbild in Bezug auf die Richtung parallel zu der Oberfläche der Probe in die Vielzahl von Dichte- oder Helligkeitswellenformen zerlegt wird, deren Anzahlen der Wiederholungen N der Dichte- oder Helligkeitswelle sich voneinander unterscheiden, um eine Dichte- oder Helligkeitsspektralverteilung zu erhalten;
einen Textur- oder Stichentfernungsprozess zum Entfernen einer oder mehrerer Dichte- oder Helligkeitswellenformen, die sich aus dem Textur- oder Stichmuster des gewebten oder gestrickten Stoffs aus der Dichte- oder Helligkeitsspektralverteilung, die in dem Spektrumanalyseprozess erhalten wird, ergeben; und
einen inversen Transformationsprozess zum Durchführen einer zweidimensionalen inversen Fourier-Transformation an der Dichte- oder Helligkeitsspektralverteilung nach dem Textur- oder Stichentfernungsprozess, um dadurch das Probenbild zu erhalten, von dem das Textur- oder Stichmuster entfernt wurde,
**dadurch gekennzeichnet, dass**
in dem Textur- oder Stichentfernungsprozess, vorausgesetzt, dass die Anzahl der Wiederholungen der Dichte- oder der Helligkeitswelle einer Wellenform, die durch das Textur- oder Stichmuster in Bezug auf eine vorbestimmte Richtung verursacht wird, als N1 definiert wird, alle Dichte- oder Helligkeitswellenformen, von denen jede Anzahl von Wiederholungen der Dichte- oder Helligkeitswelle nicht kleiner als N1 ist, aus der Dichte- oder Helligkeitsspektralverteilung entfernt werden.

2. Bildbearbeitungsvorrichtung nach Anspruch 1, wobei:
in dem Spektralanalyseprozess die zweidimensionale Fourier-Transformation an dem Probenbild in Bezug auf jede der ersten und zweiten Richtungen durchgeführt wird, die parallel zu der Oberfläche der Probe sind und einander kreuzen, um dadurch eine erste Dichte- oder Helligkeitsspektralverteilung bzw. eine zweite Dichte- oder Helligkeitsspektralverteilung zu erhalten;
in dem Textur- oder Stichentfernungsprozess die eine oder mehreren Dichte- oder Helligkeitswellenformen, die sich aus dem Textur- oder Stichmuster des gewebten oder gestrickten Stoffes ergeben, sowohl aus der ersten Dichte- oder Helligkeitsspektralverteilung als auch der zweiten Dichte- oder Helligkeitsspektralverteilung entfernt werden; und
in dem inversen Transformationsprozess die zweidimensionale inverse Fourier-Transformation sowohl an der ersten Dichte- oder Helligkeitsspektralverteilung als auch an der zweiten Dichte- oder Helligkeitsspektralverteilung durchgeführt wird, um dadurch das Probenbild zu erhalten, von dem das Textur- oder Stichmuster in Bezug auf sowohl die erste Richtung als auch die zweite Richtung entfernt wurde.

3. Bildbearbeitungsverfahren für ein Probenbild, das durch Fotografieren einer Oberfläche einer Probe eines gewebten oder gestrickten Stoffes aus einem oder mehreren synthetischen Fasergarnen erhalten wird, wobei das Bildbearbeitungsverfahren einen Textur- oder Stichverringerungsschritt umfasst, bei dem eine Textur oder ein Stichmuster des gewebten oder gestrickten Stoffes auf dem Probenbild weniger sichtbar gemacht wird,
wobei
vorausgesetzt, dass die Anzahl der Wiederholungen einer Dichte- oder Helligkeitswelle pro vorbestimmter Länge in Bezug auf eine Richtung parallel zur Oberfläche der Probe N ist, eine Schwankung der Dichte oder Helligkeit auf dem Probenbild als eine zusammengesetzte Wellenform einer Vielzahl von Dichte- oder Helligkeitswellenformen betrachtet wird, deren Anzahlen von Wiederholungen N der Dichte- oder Helligkeitswelle sich voneinander unterscheiden und das Textur- oder Stichverringerungsverfahren umfasst:
einen Spektralanalyseprozess zum Ausführen einer zweidimensionalen Fourier-Transformation an dem Probenbild, wodurch die Schwankung der Dichte oder Helligkeit auf dem Probenbild in Bezug auf die Richtung parallel zu der Oberfläche der Probe in die Vielzahl von Dichte- oder Helligkeitswellenformen zerlegt wird, von denen sich die Anzahlen der Wiederholungen N der Dichte- oder Helligkeitswelle voneinander unterscheiden, um eine Dichte- oder Helligkeitsspektralverteilung zu erhalten;
einen Textur- oder Stichentfernungsprozess zum Entfernen einer oder mehrerer Dichte- oder Helligkeitswellenformen, die sich aus dem Textur- oder Stichmuster des gewebten oder gestrickten Stoffs, aus der Dichte- oder Helligkeitsspektralverteilung, die in dem Spektrumanalyseprozess erhalten wird, ergeben; und
einen inversen Transformationsprozess zum Durchführen einer zweidimensionalen inversen Fourier-Transformation an der Dichte- oder Helligkeitsspektralverteilung nach dem Textur- oder Stichentfernungsprozess, um dadurch das Probenbild zu erhalten, von dem das Textur- oder Stichmuster entfernt wurde,
**dadurch gekennzeichnet, dass**
in dem Textur- oder Stichentfernungsprozess, vorausgesetzt, dass die Anzahl der Wiederholungen der Dichte- oder Helligkeitswelle einer Wellenform, die durch das Textur- oder Stichmuster in Bezug auf eine vorbestimmte Richtung verursacht wird, als N1 definiert wird, alle Dichte- oder Helligkeitswellenformen, von denen jede Anzahl von Wiederholungen der Dichte- oder Helligkeitswelle nicht kleiner als N1 ist, aus der Dichte- oder Helligkeitsspektralverteilung entfernt werden.

## Revendications

1. Appareil de traitement d'image configuré pour effectuer un traitement d'image sur une image de spécimen obtenue en photographiant une surface d'un spécimen (7) d'un tissu tissé ou tricoté constitué d'un ou plusieurs fils de fibre synthétique, dans lequel
l'appareil de traitement d'image exécute un processus de réduction de texture ou de couture pour fabriquer un motif de texture ou de couture du tissu tissé ou tricoté qui puisse être moins remarqué sur l'image de spécimen,
dans lequel,
en supposant que le nombre de répétitions d'une onde de densité ou de brillance pour une longueur prédéterminée par rapport à une direction parallèle à la surface du spécimen soit de N, une fluctuation de densité ou de brillance de l'image de spécimen est observée comme une forme d'onde composite d'une pluralité de formes d'onde de densité ou de brillance dont les nombres de répétitions N de l'onde de densité ou de brillance sont différents les uns des autres, et le processus de réduction de texture ou de couture comprend :
un processus d'analyse spectrale pour réaliser une transformée de Fourier bidimensionnelle sur l'image de spécimen, décomposant de la sorte la fluctuation de densité ou de brillance sur l'image de spécimen par rapport à la direction parallèle à la surface du spécimen en la pluralité de formes d'onde de densité et de brillance dont les nombres de répétitions N de l'onde de densité ou de brillance sont différents les uns des autres, pour obtenir une distribution spectrale de densité ou de brillance ;
un processus d'élimination de texture ou de couture pour éliminer une ou plusieurs formes d'onde de densité ou de brillance résultant du motif de texture ou de couture du tissu tissé ou tricoté de la distribution spectrale de densité ou de brillance obtenue dans le processus d'analyse spectrale ; et
un processus de transformation inverse pour effectuer une transformée de Fourier inverse bidimensionnelle sur la distribution spectrale de densité ou de brillance après le processus d'élimination de texture ou de couture, en obtenant de la sorte l'image de spécimen dont le motif de texture ou de couture a été éliminé,
**caractérisé en ce que**,
dans le processus d'élimination de texture ou de couture, en supposant que le nombre de répétitions de l'onde de densité ou de brillance d'une forme d'onde provoquée par le motif de texture ou de couture par rapport à une direction prédéterminée soit défini par N1, toutes les formes d'onde de densité ou de brillance dont le nombre de répétitions de l'onde de densité ou de brillance n'est pas inférieur à N1 sont éliminées de la distribution spectrale de densité ou de brillance.

2. Appareil de traitement d'image selon la revendication 1, dans lequel :
dans le processus d'analyse spectrale, la transformée de Fourier bidimensionnelle est effectuée sur l'image de spécimen par rapport à chacune de première et seconde directions qui sont parallèles à la surface du spécimen et se croisent l'une l'autre, en sorte d'obtenir une première distribution spectrale de densité ou de brillance et une seconde distribution spectrale de densité ou de brillance, respectivement ;
dans le processus d'élimination de texture ou de couture, les une ou plusieurs formes d'onde de densité ou de brillance résultant du motif de texture ou de couture du tissu tissé ou tricoté sont éliminées à la fois de la première distribution spectrale de densité ou de brillance et de la seconde distribution spectrale de densité ou de brillance ; et,
dans le processus de transformation inverse, la transformée de Fourier inverse bidimensionnelle est effectuée à la fois sur la première distribution spectrale de densité ou de brillance et sur la seconde distribution spectrale de densité ou de brillance, en sorte d'obtenir l'image de spécimen dont le motif de texture ou de couture a été éliminé par rapport à la fois à la première direction et à la seconde direction.

3. Processus de traitement d'image pour une image de spécimen obtenue en photographiant une surface d'un spécimen d'un tissu tissé ou tricoté constitué d'un ou plusieurs fils de fibre synthétique,
le processus de traitement d'image comprenant une étape de réduction de texture ou de couture pour fabriquer un motif de texture ou de couture du tissu tissé ou tricoté qui puisse être moins remarqué sur l'image de spécimen,
dans lequel,
en supposant que le nombre de répétitions d'une onde de densité ou de brillance pour une longueur prédéterminée par rapport à une direction parallèle à la surface du spécimen soit de N, une fluctuation de densité ou de brillance sur l'image de spécimen est observée comme une forme d'onde composite d'une pluralité de formes d'onde de densité ou de brillance dont les nombres de répétitions N de l'onde de densité ou de brillance sont différents les uns des autres, et le processus de réduction de texture ou de couture comprend :
un processus d'analyse spectrale pour réaliser une transformée de Fourier bidimensionnelle sur l'image de spécimen, en décomposant ainsi la fluctuation de densité ou de brillance sur l'image de spécimen par rapport à la direction parallèle à la surface du spécimen en la pluralité de formes d'onde de densité ou de brillance dont les nombres de répétitions N de l'onde de densité ou de brillance sont différents les uns des autres, afin d'obtenir une distribution spectrale de densité ou de brillance ;
un processus d'élimination de texture ou de couture pour éliminer une ou plusieurs formes d'onde de densité ou de brillance résultant du motif de texture ou de couture du tissu tissé ou tricoté de la distribution spectrale de densité ou de brillance obtenue dans le processus d'analyse spectrale ; et
un processus de transformation inverse pour effectuer une transformée de Fourier inverse bidimensionnelle sur la distribution spectrale de densité ou de brillance après le processus d'élimination de texture ou de couture, en obtenant de la sorte l'image de spécimen dont le motif de texture ou de couture a été éliminé,
**caractérisé en ce que**,
dans le processus d'élimination de texture ou de couture, en supposant que le nombre de répétitions de l'onde de densité ou de brillance d'une forme d'onde provoquée par le motif de texture ou de couture par rapport à une direction prédéterminée soit défini par N1, toutes les formes d'onde de densité ou de brillance dont le nombre de répétitions de l'onde de densité ou de brillance n'est pas inférieur à N1 sont éliminées de la distribution spectrale de densité ou de brillance.
